# EUROPEAN PATENT APPLICATION

(11) **EP 2 604 120 A1**
(43) Date of publication of application: **19.06.2013**
(21) Application number: 11193344.6
(22) Date of filing: 13.12.2011
(51) Int. Cl.: A22B 5/00, G01N 1/28

(54) **Apparatus and method for automated sampling**

(71) Applicant: Parlanca Limited, Dublin 2 (IE)
(72) Inventor: The designation of the inventor has not yet been filed
(74) Representative: Syrtsova, Ekaterina

(57) **Abstract**

An apparatus (1, 2) for obtaining samples from tissue sources, such as meat, comprising at least: a substrate tape (3) having abrasive, scraping, scratching adhesive material or the like arranged thereon for removing and retaining a sample of tissue from the tissue source; a mechanism (6) for dispensing portions of the substrate tape (3) in sequence for delivery to respective tissue sources; and a mechanism (7) for delivering portions of the substrate tape (3) into contact with a surface of the tissue source.

## Description

The present invention relates to an apparatus and method for the automated collection of a tissue sample from a meat source, in particular samples taken from meat sources in abattoirs with high speed kill lines and high speed meat packing plants.

In the meat handling and packaging field it has become increasingly important to monitor and control the safety and quality of meat being processed. The rise in importance of such monitoring has been the result of a number of factors. Primarily there is the need to monitor for potential pathogens or meat contamination. This is particularly acute in light of outbreaks of E. coli, listeria and salmonella. However, there is also a growing need to control meat quality, e.g. tenderness, flavour and taste, and there are now an array of potential genetic and other tests which can be used to asses such qualities.

Additionally, in the meat processing industry there is a need to allow end users or members of the production chain to test meat products to determine the source of the meat. This could involve tracing meat in a product back to an individual animal, farm, abattoir etc. This may be useful to track the source of an outbreak of pathogen, or to determine that the meat is obtained from the appropriate source (e.g. organic farms, kosher or halal meat processing plants or the like). At present it is only possible to achieve this, at scale, through the use of labelling systems that link to records that relate to the animals slaughtered. Such labelling systems often lack precision, being batch based, rather than individual animal based, and labelling is subject to error and fraud.

The use of the DNA of an animal to act as a natural identifier has the advantage that DNA is present in all parts of the animal and it cannot be altered. Since 1997, e.g. WO 98/39475 (PARLANCA), DNA identification technology has been used to address the considerations above, however the uptake of the technology has been limited to small scale, high value premium priced meat products. This is due in part to the difficulties involved in taking samples from meat in large abattoirs or meat processing plants.

In the genetic identification (DNA analysis) of meat it is generally required to take a tissue sample which is typically achieved at or around the point of slaughter, e.g. at the 'hot scales' or at other points, pre or post carcass deboning. This facilitates correlation of the animal or carcass identity with the identity of the sample taken. The samples are generally taken and stored, e.g. under refrigeration, for later analysis. A number of hand-held devices to obtain a meat sample manually from a carcass are known. For example, WO 00/12008 (PARLANCA) discloses a sampling device having a spiked portion, with barb-like teeth extending from it, which is penetrated into the carcass and on removal samples of the meat are secured on the teeth for later analysis. JP2004361376 (TANAKA) discloses a device having round barrel with a sharpened edge to be inserted into the meat surface and subsequently withdrawn together with a sample of the meat to be stored in the barrel and sealed with a detachable lid. WO 08/034874 (PARLANCA) discloses an omni-directional sampling tool for easy obtaining of a sample no matter how the user holds the tool.

Such devices are not well suited to high speed processing environments herein defined by the line speed, measured as carcasses per hour. A high speed line is one in which it is not possible for a single unassisted operator to conduct the sampling process using devices similar to WO 00/12008 or WO 08/034874. This translates into a line speed of greater than about 240 carcasses/hour or 1 sample per 15 seconds. Many larger cattle slaughter plants operate at line speeds of about 325/hour, large pig slaughter facilities may operate at up to 1500/hour, while poultry processing plants may move at more than 8,000/hour. The speed of the sampling process is a critical parameter in the environments of a high speed kill line abattoir or high speed meat packaging plant. An inefficient sampling process can not slow down the production line as this would lead to production inefficiencies and add significant cost. In general the sampling process must keep up with the rate that carcasses in an abattoir pass. Thus automated sampling is becoming an increasingly important feature of meat sampling technology. Such sampling will require an apparatus that is simple and convenient enough to allow ready automation and that is robust enough to withstand the harsh physical environment in which it is deployed. This is not the case with prior art sampling devices.

It is an object of the present invention to provide a relatively simple, yet fast, efficient, robust and reliable automated sampling apparatus.

According to a first aspect of the present invention, there is provided an apparatus for sampling comprising
a substrate having a sampling means arranged thereon, the substrate comprising a plurality of sampling portions containing the sampling means;
the sampling means being adapted to remove and retain a sample of tissue from a surface of tissue source;
a mechanism for dispensing sampling portions in sequence for delivery to respective tissue sources; and
a mechanism for delivering a sampling portion of the substrate into contact with a surface of a tissue source.

Ideally, the apparatus comprises a mechanism for removing the sampling portion from the tissue source, preferably for storing or intermediate accumulation, once a sample has been obtained.

Preferably, the mechanism for removing and storing the sampling portion comprises a sealing means for sealing a sample on the sampling portion from the surrounding atmosphere.

Preferably, the tissue source comprises any of the following: muscle mass, fat, skin or blood, while in practice any tissue containing DNA may be suitable. The apparatus of the present invention is suitable for obtaining a sample from essentially any meat species. Mention may be made of beef, pork, poultry and lamb/mutton, these generally making up the bulk of meat production, but the device is, of course, equally suited to other species such as venison, goat, horse etc.

The relevant mechanisms of the apparatus, i.e. the mechanism for dispensing sampling portions, the mechanism for delivering them to respective tissue sources and the mechanism for removing sampling portions from the tissue sources for storing comprise respective drive means for driving the mechanisms and, ideally, the mechanisms are synchronised with the speed/frequency of movement of tissue sources in relation to the apparatus. Thus, the apparatus takes samples from multiple tissue sources in the sequence in which the tissue sources pass by the apparatus during their relative movement in relation to the apparatus. The provision of the mechanisms for dispensing the sampling portions, for delivering the sampling portions to the respective tissue sources and for removing sampling portions from the tissue sources (or transferring the obtained samples for storage) and the synchronisation of the mechanisms with the relative movement of the tissue sources allows samples to be taken in a high speed production environment, e.g. from tissue sources moving on or being moved by a high speed conveyor.

As such, the apparatus of the invention is particularly suited for use in an abattoir or meat processing plant where conveyors are used to transport meat objects at high speeds.

In one advantageous embodiment, the substrate comprises a substrate tape.

Preferably, the sampling means comprises an abrasive, a scratching, a scraping or an adhesive material arranged on the substrate, or other suitable material adapted to remove and retain thereon a sample of tissue from the tissue source. Preferably, the sampling portions comprise lengths of the tape defined in sequence one after another along the tape. In one arrangement, the sampling portions are marked on the substrate tape e.g. by boundary marks. In one variation, the sampling portions are detachable from the substrate tape by way of, for example, a tear-off arrangement, such as for example a weakened or perforated line dividing adjacent sampling portions.

The advantage of using a substrate tape having a sampling means, such as for example, adhesive, abrasive, scraping or scratching material arranged thereon is that it is inexpensive, can be relatively readily integrated into a fast conveyor environment and is efficient and reliable in its function of obtaining a sample without an operator's intervention.

Preferably, the mechanism for dispensing sampling portions in sequence for delivery to respective tissue sources comprises a first reel adapted for storing and unwinding the substrate tape and means for supporting the tape taut, e.g. rollers or jigs.

Preferably, a mechanism for delivering a sampling portion of the substrate into contact with a surface of a tissue source comprises an articulated arm. In one arrangement, the articulated arm comprises gripping means for gripping a sampling portion and detaching it from the substrate. In another arrangement, the substrate is arranged to travel over a free end portion of the arm so that a sampling portion can be brought into contact with a tissue source when the sampling portion is located at the free end. The articulated arm is preferably a robotic arm.

Conveniently, the sealing means for sealing a sample on the sampling portion from the surrounding atmosphere comprises a sealing tape arranged to cooperate with the sampling portions so as to sealingly cover samples on the sampling portions. The sealing tape preferably comprises a fastening means, such as for example, an adhesive for affixing the sealing tape to the sampling portion and sealing the sample between the sealing tape and the sampling portion. The sealing tape is preferably arranged on a second reel adapted for storing and unwinding the sealing tape. The sealing tape is preferably supported taut by a second means for supporting the tape, e.g. rollers or jigs. Preferably, a closing mechanism is provided for affixing the sealing tape over the sampling portion. In one arrangement, the sealing tape co-operates with the substrate tape. For example, a pair of co-operating adjacently located tape supporting means, e.g. rollers or jigs, can be provided for supporting the sealing tape and the substrate tape taut so that when the sealing tape and the substrate tape pass over the respective tape supporting means, the sealing tape and the substrate tape are brought into contact sufficient to enable the tapes to be affixed to each other. In one arrangement, a pair of co-operating sealing tapes is provided so as to sandwich the sampling portion between sealing tapes. Preferably, the closing mechanism is adapted to seal together the sealing tapes so that the sampling portion remains sealed between the sealing tapes. For example, a pair of co-operating adjacently located tape supporting means, e.g. rollers or jigs, can be provided for supporting the co-operating sealing tapes taut so when the sealing tapes pass over the respective tape supporting means, the sealing tapes are brought into contact sufficient to enable the tapes to be affixed to each other. In this case, the mechanism for delivering a sampling portion of the substrate into contact with a surface of a tissue source is preferably adapted to place a sampling portion between the sealing tapes before the sealing tapes are affixed to each other.

Preferably, the mechanism for removing and storing the sampling portion from the tissue source once a sample has been obtained comprises a take up reel for spooling a tape with obtained samples. In one variation, the tape with obtained samples comprises the substrate tape sealed together with the sealing tape. In another variation, the tape with obtained samples comprises the pair of sealing tapes sealed together with a sampling portion sandwiched therebetween. Preferably, the take up reel is adapted to spool the tape with obtained samples.

Ideally, the apparatus comprises means for correlating a sample taken by the apparatus to a tissue source. Preferably, the correlation means comprises an identification (ID) means. Preferably, the sampling portions and the tissue source comprise corresponding ID means for identifying the sampling portion. This is advantageous where it is important to keep a track of the particular sample and correlate it to the particular tissue source. The ID means may comprise, for example but not limited thereto, e.g. an electronic tag, a time stamp, a barcode, a radio frequency identification (RFID) tag provided on the sampling portion and the tissue source though other suitable tags or identifiers will be readily apparent to the person skilled in the art.

According to a second aspect of the invention there is provided a method for sampling comprising the steps of
a) providing a substrate having a sampling means arranged thereon, the substrate comprising a plurality of sampling portions containing the sampling means;
b) dispensing sampling portions in sequence for delivery to respective tissue sources;
c) delivering a sampling portion of the substrate into contact with a surface of a tissue source; and
d) removing a sample of tissue from a surface of tissue source with the sampling means.

All essential, preferred or optional features of the first aspect of the invention can be provided in conjunction with the features of the second aspect of the invention and vice versa where appropriate.

Embodiments of the invention will now be described, by way of example only, with reference to the accompanying drawings, in which:-
Figure 1 is a schematic plan view of a first embodiment of the apparatus of the invention; and
Figure 2 is a schematic perspective view of a second embodiment of the apparatus of the invention.

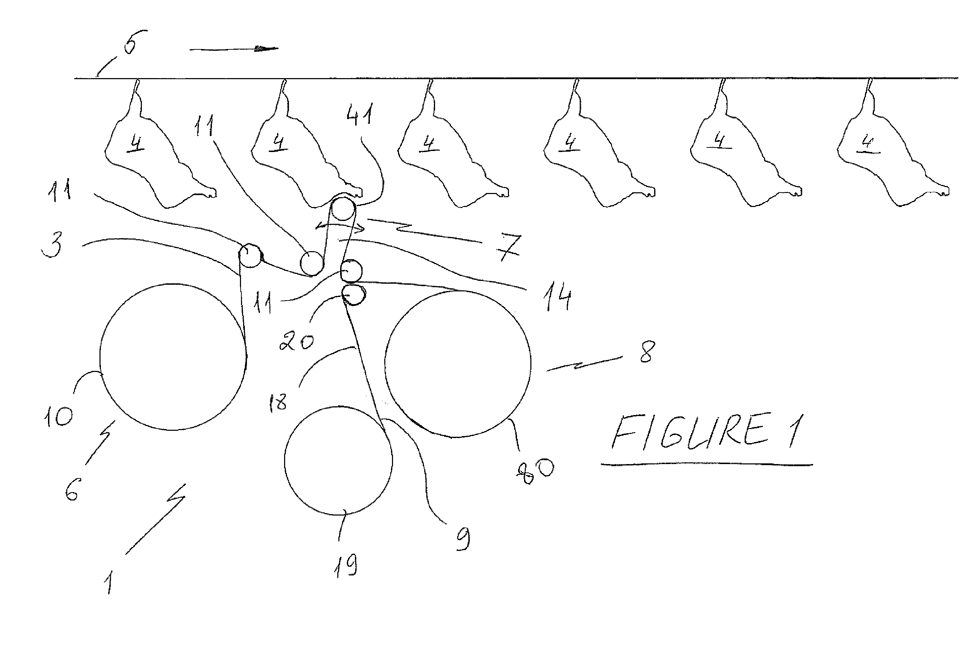

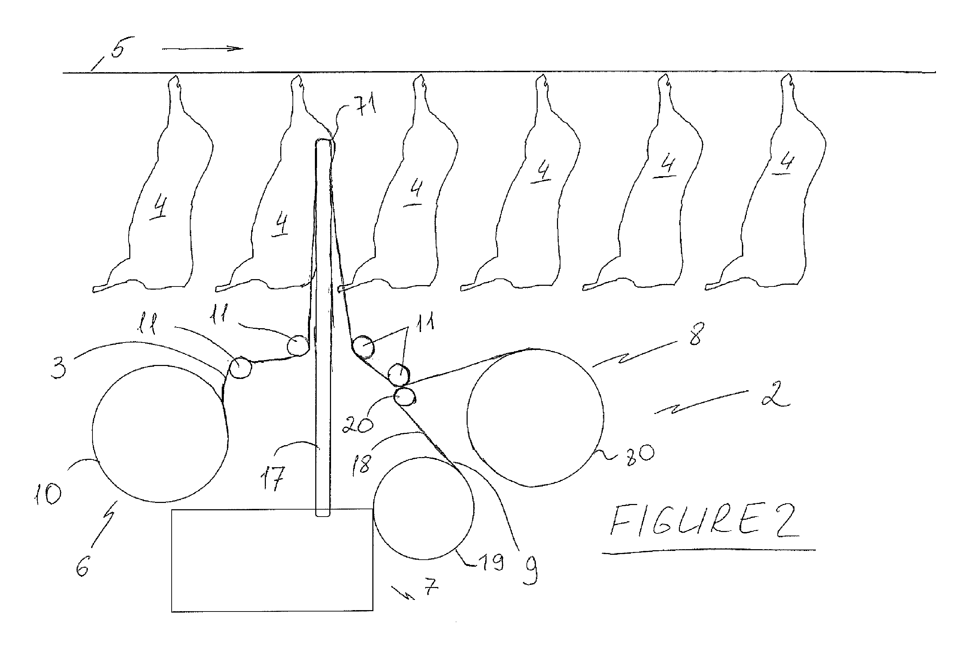

Referring to Figure 1, a first embodiment of the apparatus for sampling in accordance with the present invention is indicated generally by reference numeral 1. Referring to Figure 2, a second embodiment of the apparatus for sampling in accordance with the present invention is indicated generally by reference numeral 2.

Apparatus 1, 2 comprises a substrate carrying a sampling means. The substrate comprises a substrate tape 3 having an adhesive, abrasive, scraping or scratching material (not shown) arranged thereon adapted to remove and retain thereon a sample of tissue from the tissue source. Substrate tape 3 is divided into a plurality of sampling portions (not shown) containing the sampling means, i.e. the abrasive or scratching material. Although not shown in the drawings, the sampling portions can be marked (e.g. printed or otherwise indicated) on the substrate tape 3.

The sampling portions comprise lengths of the substrate tape 3 defined in sequence one after another along the substrate tape 3. The sample removing means is adapted to remove and retain a sample of tissue from a surface of tissue source.

The tissue source typically comprises a meat source, such as, for example, a carcass 4 which may be fresh or frozen, or a cut of meat obtained from a carcass. The apparatus 1, 2 of the present invention is suitable for obtaining a sample from essentially any species of meat. Mention may be made of beef, lamb/mutton and pork, these generally making up the bulk of meat production, but the device is, of course, equally suited to other species such as venison, chicken, turkey, goat, horse etc.

The apparatus 1, 2 is described in an application at an abattoir or meat packaging plant where conveyors 5 are used to transport meat objects at high speeds in the direction indicated by arrows in Figures 1 and 2.

Each apparatus 1, 2 comprises a mechanism 6 for dispensing the sampling portions in sequence for delivery to the respective tissue sources and a mechanism 7 for delivering a sampling portion of substrate tape 3 into contact with a surface of a tissue source. The mechanism 7 of apparatus 1, 2 comprises an articulated arm 14, 17, respectively.

The apparatus 1, 2 comprises a mechanism 8 for removing the sampling portion from the tissue source for storing once a sample has been obtained.

The mechanism 8 for removing and storing the sampling portion from the tissue source comprises a sealing means 9 for sealing a sample on the sampling portion from the surrounding atmosphere.

The mechanisms 6, 7, 8 of the apparatus, respectively, for dispensing sampling portions, delivering them to respective tissue sources and removing for storing comprise respective drive means (not shown), e.g. motors, for driving the mechanisms, and the mechanisms are synchronised with the speed/frequency of movement of tissue sources in relation to the apparatus 1, 2. Thus, the apparatus 1, 2 takes samples from multiple tissue sources 4 in the sequence in which the tissue sources 4 pass by the apparatus 1, 2 during their relative movement in relation to the apparatus, i.e., in this case, as the tissue sources are being transferred by the conveyor 5. The provision of the mechanisms 6, 7, 8 for dispensing the sampling portions, for delivering the sampling portions to the respective tissue sources and for transferring the obtained samples for storage together with the synchronisation of the mechanisms with the relative movement of the tissue sources 4 allows samples to be taken in a high speed production environment, even if the conveyor 5 is a high speed conveyor.

Preferably, the mechanism 6 for dispensing sampling portions in sequence for delivery to respective tissue sources comprises a first reel 10 adapted for storing and unwinding the substrate tape 3. In apparatus 1, 2 rollers 11 for supporting the substrate tape 3 are providedAlternatively, a jig can be provided for supporting the substrate tape 3.

In apparatus 1, 2 the articulated arm 14, 17 comprises a free end portion 41, 71 respectively, which contacts a tissue source 4 when the articulated arm 14, 17 moves towards the tissue source to collect a sample. The substrate tape 3 is arranged to travel over the free end portion 41, 71 of the arm 14, 17 so that a sampling portion of the substrate tape 3 contacts the tissue source when the sampling portion is located at the free end 41, 71 and the articulated arm 14, 17 has moved towards the tissue source 14 to collect a sample.

In a further embodiment of the apparatus of the invention (not shown in the drawings), the articulated arm comprises gripping means in the form of gripping jaws for gripping a sampling portion and detaching it from the substrate tape. In this embodiment, the sampling portions are detachable from the substrate tape by way of, for example, a tear-off arrangement, such as for example a weakened or perforated line dividing adjacent sampling portions

The articulated arm 14, 17 is preferably a robotic arm.

In apparatus 1, 2, the sealing means 9 for sealing a sample on the sampling portion from the surrounding atmosphere comprises a sealing tape 18 arranged on a second reel 19 adapted for storing and unwinding the sealing tape 18 and arranged to cooperate with the sampling portions so as to sealingly cover samples on the sampling portions. The sealing tape 18 is supported and held taut by a roller 20. The sealing tape 18 co-operates with the substrate tape 3 to seal the sample between the substrate tape 3 and sealing tape 18. The apparatus 1, 2 comprises closing mechanism for affixing the sealing tape 18 over the sampling portion. A pair of co-operating adjacently located rollers 11 and 20 support the substrate tape 3 and the sealing tape 18 taut so when the sealing tape 3 and the substrate tape 18 pass over the rollers 11, 20, the substrate tape 3 and the sealing tape 18 are brought into contact sufficient to enable the tapes 11, 20 to be affixed to each other.

In a further embodiment of the apparatus of the invention (not shown in the drawings), the sealing means for sealing a sample on the sampling portion from the surrounding atmosphere comprises a pair of sealing tapes arranged on respective second reels adapted for storing and unwinding the sealing tapes. The sealing tapes are arranged so as to sandwich the sampling portion between sealing tapes. The sealing tapes are supported and held taut by respective support rollers and/or jigs. The support rollers or jigs can be adapted to operate as a closing mechanism to seal together the sealing tapes so that the sampling portion remains sealed therebetween. The support rollers and/or jigs are arranged adjacent each other so when the sealing tapes pass over the respective support rollers and/or jigs, the sealing tapes are brought into contact sufficient to enable the tapes to be affixed to each other. The articulated arm is adapted to place a sampling portion between the sealing tapes before the sealing tapes are affixed to each other.

In the presently described embodiments, the sealing tape comprises an adhesive for affixing the sealing tape to the sampling portion and sealing the sample between the sealing tape and the sampling portion.

The mechanism 8 for removing and storing the sampling portion from the tissue source once after a sample has been obtained comprises a take up reel 80 for spooling a tape with obtained samples. In apparatus 1, 2, the tape with obtained samples is the substrate tape 3 sealed together with the sealing tape 9. In a further embodiment of the apparatus 2, the tape with obtained samples comprises the pair of sealing tapes sealed together with a sampling portion sandwiched therebetween. The take up reel 80 is adapted to spool the tape with obtained samples.

The apparatus 1, 2 comprises means for correlating a sample taken by the apparatus 1, 2 to a tissue source 4. The correlation means comprises an identification (ID) means provided on the tissue source 4 and on the sampling portion. The ID means on the sampling portion and on the tissue source 4 from which a sample has been transferred on the sampling portion correspond so that information on the sampling portion is sufficient to identify the tissue source 4. The ID means may comprise, for example but not limited thereto, e.g. an electronic tag, a time stamp, a barcode , a radio frequency identification (RFID) tag provided on the sampling portion and the tissue source 4, though other suitable tags or identifiers will be readily apparent to the person skilled in the art.

Modifications and improvements can be made to the embodiments herein before described without departing from the scope of the invention.

## Claims

1. An apparatus for sampling comprising
a substrate having a sampling means arranged thereon, the substrate comprising a plurality of sampling portions containing the sampling means;
the sampling means being adapted to remove and retain a sample of tissue from a surface of tissue source;
a mechanism for dispensing sampling portions in sequence for delivery to respective tissue sources; and
a mechanism for delivering a sampling portion of the substrate into contact with a surface of a tissue source.

2. An apparatus as claimed in claim 1, wherein, the sampling means comprises an abrasive, a scratching, a scraping or an adhesive material arranged on the substrate, or other suitable material adapted to remove and retain thereon a sample of tissue from the tissue source.

3. An apparatus as claimed in claim 1 or claim 2, wherein, the substrate comprises a substrate tape.

4. An apparatus as claimed in any preceding claim, wherein the apparatus comprises a mechanism for removing the sampling portion from the tissue source for storing or intermediate accumulation once a sample has been obtained.

5. An apparatus as claimed in claim 4, wherein the mechanism for removing the sampling portion comprises a sealing means for sealing a sample on the sampling portion from the surrounding atmosphere.

6. An apparatus as claimed in claim 4 in combination with any preceding claim, wherein the mechanism for dispensing sampling portions, the mechanism for delivering them to respective tissue sources and the mechanism for removing sampling portions from the tissue sources comprise respective drive means for driving the mechanisms and wherein the mechanisms are synchronised with the speed or frequency of movement of tissue sources in relation to the apparatus so that the apparatus is operable to take samples from multiple tissue sources in the sequence in which the tissue sources pass by the apparatus during their relative movement in relation to the apparatus.

7. An apparatus as claimed in claim 3 in combination with any preceding claim, wherein the sampling portions comprise lengths of the tape defined in sequence one after another along the tape.

8. An apparatus as claimed in any preceding claim, wherein the mechanism for delivering a sampling portion of the substrate into contact with a surface of a tissue source comprises an articulated arm.

9. An apparatus as claimed in claim 3 in combination with any preceding claim, wherein the mechanism for dispensing sampling portions in sequence for delivery to respective tissue sources comprises a first reel adapted for storing and unwinding the substrate tape and a means for supporting the tape taut.

10. An apparatus as claimed in claim 5 in combination with any preceding claim, wherein the sealing means for sealing a sample on the sampling portion from the surrounding atmosphere comprises a sealing tape arranged to cooperate with the sampling portions so as to sealingly cover samples on the sampling portions.

11. An apparatus as claimed in claim 10, wherein the sealing tape is preferably arranged on a second reel adapted for storing and unwinding the sealing tape and the sealing tape is supported taut by a second means for supporting the sealing tape.

12. An apparatus as claimed in claim 10 or claim 11, wherein a closing mechanism is provided for affixing the sealing tape over the sampling portion.

13. An apparatus as claimed in claim 3 in combination with any one of claims 10 to 12, wherein the sealing tape co-operates with the substrate tape.

14. An apparatus as claimed in claim 4 in combination with any preceding claim, wherein the mechanism for removing the sampling portion from the tissue source once a sample has been obtained comprises a take up reel for spooling a tape with obtained samples.

15. An apparatus as claimed in any preceding claim, wherein the apparatus comprises means for correlating a sample taken by the apparatus to a tissue source, wherein the correlating means comprises an identification (ID) means and wherein the sampling portions and the tissue source comprise corresponding ID means.
